# FASCICULE DE BREVET EUROPEEN

(11) **EP 1 211 924 B1**
(45) Date de publication et mention de la délivrance du brevet: **08.09.2004**
(21) Numéro de dépôt: 00930891.7
(22) Date de dépôt: 03.06.2000
(51) Int. Cl.: A01D 34/86, A01D 34/82

(54) **AMELIORATIONS A UNE TETE DE COUPE**
VERBESSERUNGEN AN EINEM SCHNEIDEKOPF
IMPROVEMENTS TO A CUTTING ATTACHMENT

(30) Priorité: 04.06.1999 BE 9900397
(43) Date de publication de la demande: 12.06.2002
(73) Titulaire: Solar & Robotics S.A., 1050 Bruxelles (BE)
(72) Inventeur: COLENS, André, B-1330 Rixensart (BE)
(74) Mandataire: Colens, Alain
(86) Numéro de dépôt international: PCT/BE2000/000059
(87) Numéro de publication internationale: WO 2000/074466

(56) Documents cités:
- EP-A- 0 324 322
- FR-A- 2 674 096
- US-A- 2 968 903

## Description

La présente invention concerne une amélioration à une tête de coupe, plus particulièrement une tête de coupe d'une tondeuse à gazon robotique.

Les tondeuses à gazon robotiques sont particulièrement bien adaptées à l'entretien de grandes surfaces de pelouses, par exemple celles rencontrées dans les terrains de golf.

Les "practices" de golf où les joueurs s'entraînent et exercent leur "drive" sont difficiles à entretenir par des moyens classiques. Les practices sont en effet couverts de nombreuses balles lancées par les joueurs et un ramassage complet des balles est nécessaire afin de permettre la tonte, d'une part pour éviter d'endommager les balles et d'autres part pour ne pas bloquer les tondeuses. De plus, les joueurs doivent arrêter tout exercice lors des tontes, afin d'éviter de blesser le personnel, ce qui limite de manière sensible l'utilisation du practice.

La demande de brevet PCT/BE96/00012 divulgue un disque de coupe à lame rétractable protégé sur sa face inférieure par un autre disque, essentiellement parallèle, et en rotation libre. Ce disque de coupe peut être utilisé avec les tondeuses robotiques telles que décrites dans la demande PCT/BE98/00038, l'ensemble moteur-disque de coupe étant monté de manière souple par rapport au châssis de manière à pouvoir suivre les irrégularités du sol.

Ce système ne convient cependant pas pour la tonte d'un practice de golf car il provoquerait également des dégâts aux balles. Les lames rétractables peuvent en effet entrer en contact avec les balles. Des essais ont été réalisés en faisant varier la hauteur de coupe mais les balles restent quelque peu en suspension sur l'herbe, en fonction de la hauteur et de la densité du gazon. Même en tondant à une hauteur supérieure au diamètre des balles, ces dernières sont donc abîmées.

Il y a en conséquence un besoin certain à développer une tête de coupe adaptée à la tonte des terrains de golf en présence de balles de golf, en particulier adaptée à la tonte automatique des practices sans intervention humaine, et éventuellement même en permettant aux joueurs de continuer leur exercices.

Dans ce but, la présente invention propose une amélioration à une tondeuse robotique, par exemple telle que décrite dans la demande de brevet PCT/BE98/00038, consistant en une tête de coupe permettant de tondre en présence d'objets durs de dimension réduite par rapport au disque de coupe, plus particulièrement des balles de golf, sans endommager ceux-ci.

Selon l'invention, le disque ou plateau en rotation libre proposé dans la demande susmentionnée est muni d'extensions, ou "dents", s'étendant radialement à sa périphérie de manière à maintenir les balles ou objets équivalents hors de portée des lames rétractables tout en permettant à celles-ci d'atteindre et couper l'herbe comme dans l'art antérieur. Le système de suspension des têtes de coupe permet à celles-ci de se soulever. Lors du passage de la tondeuse robotique, les balles passant sous le disque en rotation libre ne sont pas touchées par les lames. Le mouvement en friction est par ailleurs réduit par rapport au cas d'un disque fixe, car l'avancement de l'engin est couplé avec la rotation du disque en contact avec la balle.

Les autres avantages apportés par la présence de ce disque tel que décrit dans la demande de brevet PCT/BE96/00012 sont conservés, en particulier les propriétés auto-nettoyantes et anti-blocage.

A cet égard on notera que l'apport de dents périphériques à un disque qui n'est pas en rotation libre entraîne un encombrement spécifique indésirable à l'avant du disque. Cet encombrement est dû à l'effet de ramassage des brins d'herbe plus ou moins longs par les dents lors de l'avancement de l'engin. Grâce à la rotation libre proposée selon une des variantes de l'invention, les dents dirigés vers l'avant sont après un demi-tour dirigés vers l'arrière, et le mouvement de friction avec l'herbe de la pelouse entraîne le dégagement desdits brins et donc l'autonettoyage du disque denté.

Cette modification du disque par rapport à l'art antérieur augmente par ailleurs la sécurité du système de coupe. En contact avec un être vivant ou un objet à protéger, le disque modifié empêchera ou réduira fortement tout contact direct avec les lames. Le dispositif selon l'invention pourrait donc également s'appliquer utilement à des engins de coupe non-robotiques (débroussailleuses, tondeuses).

Le document EP 0 324 322 décrit déjà une tête de coupe comportant un disque de coupe muni à sa périphérie de plusieurs lames et un plateau inférieur présentant des extensions coplanaires s'étendant radialement au delà de la zone apte à être atteinte par les lames. La tête de coupe est cependant destinée à un engin de type coupe-bordure, et le disque de coupe de dimension réduite présente des lames fixes de grandes dimensions peu adaptées à un usage pour une tondeuse à gazon, en particulier une tondeuse à gazon robotique.

La présente invention propose donc une tête de coupe pour engin de tonte, en particulier pour tondeuse à gazon, comprenant un moteur dont l'axe d'entraînementest relié à un disque de coupeperpendiculaire audit axe et muni à sa périphérie d'au moins une lame, et un plateau inférieur essentiellement parallèle au, et situé sous le disque de coupe. La périphérie du plateau inférieur présente des extensions essentiellement coplanaires et s'étendant radialement au delà de la zone apte à être atteinte par les lames. Le plateau circulaire est de dimension ou diamètre, hors extensions, essentiellement égal ou inférieur à la dimension du disque de coupe hors lames.

A titre d'exemple, dans le cas d'une tondeuse robotique, le disque denté peut présenter un diamètre inférieur ("hors dents") de 22 cm et un diamètre "extérieur" de 29 cm.

Le plateau inférieur est monté librement sur l'axe du disque de coupe par l'intermédiaire d'un roulement, par exemple à billes, ou moyen équivalent.

Les extensions se présentent sous la forme de dents au profil arrondi (creux et sommets). La distance entre deux sommets ou extrémités d'extensions 33 voisines varie par exemple de 2 cm à 5 cm. Le nombre d'extensions par plateau inférieur varie de préférence de 10 à 60, plus préférentiellement de 20 à 40.

La tête de coupe est de préférence reliée au chassis par un système de suspension.

La tête de coupe sera de préférence adaptée à une tondeuse robotique, en particulier pour la tonte des terrains de golf, plus particulièrement des "practices".

L'invention sera mieux comprise à la lecture de la description qui suit en se référant à un exemple de réalisation et plus particulièrement en se référant aux dessins fournis à titre d'exemples non limitatifs.

La fig. 1 représente le plateau d'une tête de coupe selon l'invention vu d'en dessous.

La fig. 2 représente une vue en coupe de côté de la tête de coupe et de son montage sur un élément du châssis.

Les fig. 3a à 3b illustrent le fonctionnement de la tête de coupe en présence d'une balle selon l'art antérieur (fig. 3a) et selon l'invention (Fig. 3b-c).

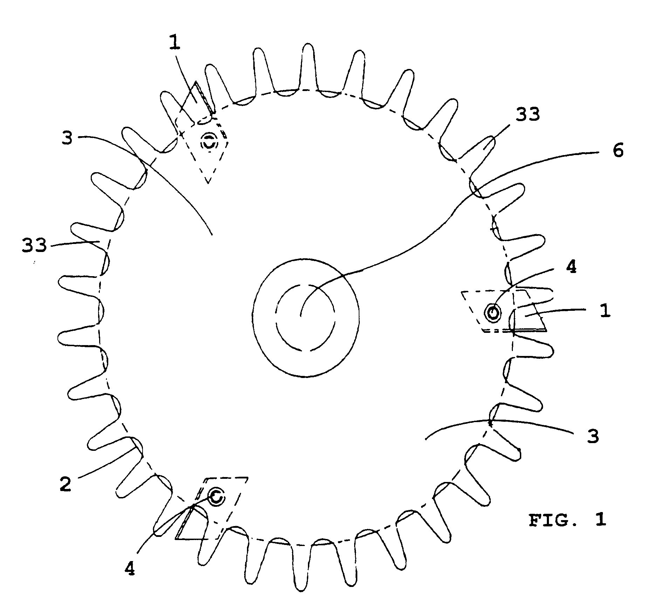

On reconnaît dans la figure 1 le plateau circulaire inférieur 3 en rotation libre autour de l'axe de coupe 6. Au dessus du plateau 3 se trouve le disque de coupe 2 entrainé par le moteur et parallèle au plateau 3. Le disque de coupe comporte sur sa périphérie trois lames 1 s'étendant radialement et pouvant librement pivoter autour d'un axe de rotation 4 et se rétracter ainsi sous le disque de coupe sous l'effet d'une résistance trop importante. Le plateau inférieur 3 (disque de protection en rotation libre) est munie à sa périphérie d'extensions 33 régulières coplanaires sous forme de dents arrondies s'étendant au delà de la zone que les lames déployées, par la force centrifuge due à la rotation du disque de coupe, peuvent atteindre. La distance entre deux extrémités radiales des extensions est inférieure aux dimensions des objets, dans cet exemple des balles de golf. Les balles sont maintenues hors de portée des lames vides entre deux extensions voisines. L'herbe peut être coupée sans que les lames ne touchent les balles.

Lors de l'avancement de la tondeuse robotique, le disque passera sur les balles, partiellement par rotation libre de celui-ci, partiellement en friction.

Selon une variante actuellement moins préférée, les extrémités des extensions peuvent être incurvées vers le haut.

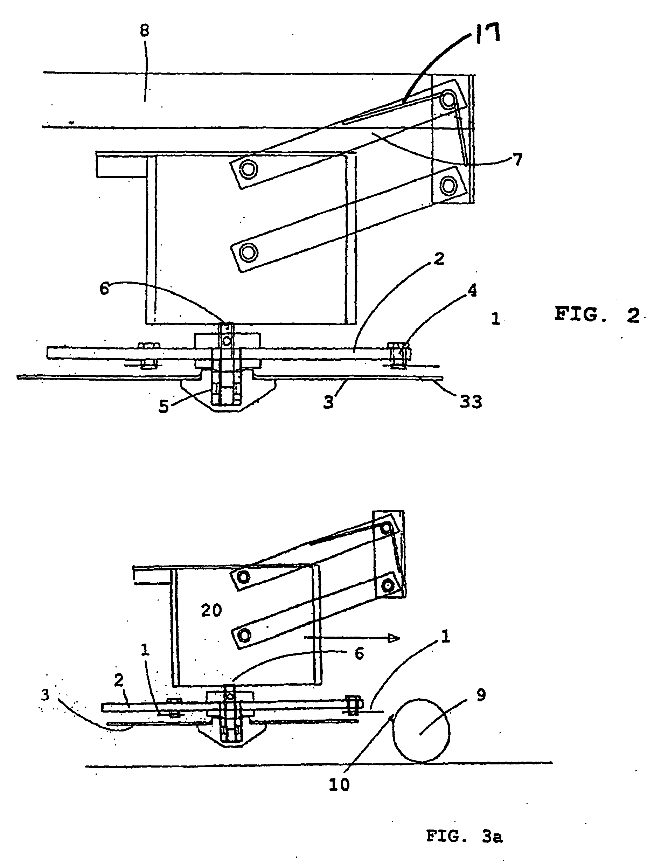

La fig. 2 illustre plus particulièrement la tête de coupe montée en suspension de manière connue (barre de suspension 7, ressort 17) sur un élément 8 du châssis. En 5 se trouve le roulement à billes permettant la rotation libre du plateau de protection 3, les autres références se retrouvant dans la Fig.1. On notera que les extensions 33 du plateau 3 s'étendent radialement légèrement plus loin que les lames 1 déployées.

Les figs 3a-b illustrent la rencontre de la tête de coupe avec un objet sphérique, par exemple une balle de golf. Dans la fig. 3a, la tête de coupe est une tête de coupe de l'art antérieur. Lors de la progression de la tondeuse, la balle 9 sera abîmée en 10 par les lames 1 en mouvement de rotation, avant de passer sous la tête de coupe "flottante", entièrement en friction, plus particulièrement sous le plateau 3 en rotation libre.

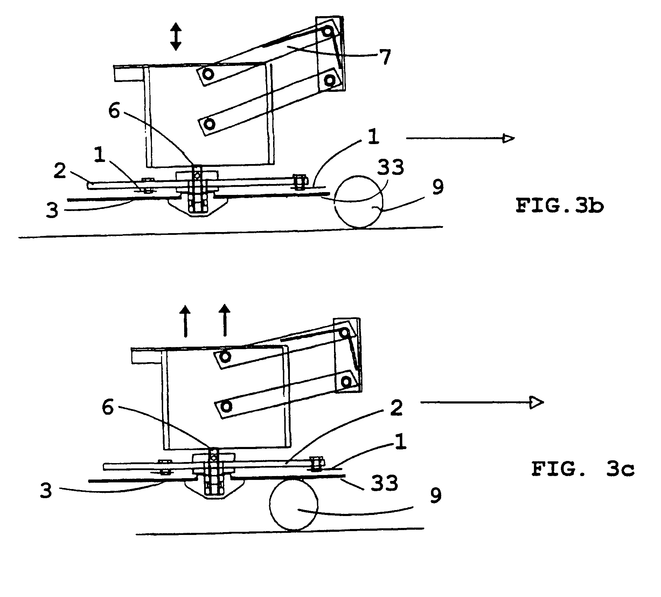

Les figs. 3b et 3c illustrent la rencontre de la tête de coupe selon l'invention et d'une balle de golf. Les extensions 33 du plateau 3 empêchent le contact des lames avec la balle qui passera avantageusement sous le plateau en rotation libre, la tête de coupe se soulevant. Parallèlement, la balle elle-même généralement s'enfoncera d'un certain degré dans l'herbe et le passage s'effectuera sous le plateau avec un minimum de friction (fig. 3c).

## Revendications

1. Tête de coupe pour engin de tonte, comprenant un moteur dont l'axe d'entraînement (6) est relié à un disque de coupe (2) perpendiculaire audit axe et muni à sa périphérie d'au moins une lame (1), et un plateau inférieur (3) essentiellement parallèle au, et situé sous le disque de coupe (2), la périphérie du plateau inférieur (3) présentant des extensions (33) essentiellement coplanaires et s'étendant radialement au delà de la zone apte à être atteinte par les lames (1) **caractérisé en ce que** le plateau (3) circulaire est de dimension, hors extensions (33), essentiellement égale ou inférieur à la dimension du disque de coupe (2) hors lames (1).

2. Tête de coupe selon n'importe laquelle des revendications précédentes dans lequel le plateau inférieur (3) est monté librement sur l'axe (6) du disque de coupe (2) par l'intermédiaire d'un roulement ou moyen équivalent.

3. Tête de coupe selon n'importe laquelle des revendications précédentes dans lequel les extensions (33) se présentent sous la forme de dents au profil arrondi (creux et sommets).

4. Tête de coupe selon n'importe laquelle des revendications précédentes dans lequel la distance entre deux sommets ou extrémités d'extensions (33) voisines varie de 2 cm à 5 cm.

5. Tête de coupe selon n'importe laquelle des revendications précédentes dans lequel le nombre d'extensions varie de 10 à 60, de préférence de 20 à 40.

6. Tête de coupe selon n'importe laquelle des revendications précédentes reliée au châssis par un système de suspension.

7. Tête de coupe selon n'importe laquelle des revendications précédentes dans laquelle les extrémités des extensions 33 sont légèrement incurvées vers le haut.

8. Tondeuse à gazon munie d'une tête de coupe selon n'importe laquelle des revendications précédentes.

9. Tondeuse selon la revendication précédente **caractérisée en ce qu'**il s'agit d'une tondeuse robotique.

10. Tondeuse selon n'importe laquelle des revendications 8 ou 9 **caractérisé en ce qu'**elle est adaptée à la tonte des terrains de golf, plus particulièrement des "practices".

## Claims

1. A cutting attachment for a mowing machine, comprising a motor whereof the driving shaft (6) is linked to a cutter disk (2) perpendicular to said shaft and provided at its periphery with at least one blade (1), and a bottom plate (3) substantially parallel to, and located beneath the cutter disk (2), the periphery of the bottom plate (3) being provided with substantially coplanar extensions (33), extending radially beyond the zone reachable by the blades (1) **characterized in that** the the circular plate (3) has a size, excluding the extensions (33), which is substantially equal to or smaller than the size of the cutter disk (2) excluding the blades (1).

2. A cutting attachment as claimed in any preceding claim, wherein the bottom plate (3) is mounted freely on the pin (6) of the cutter disk (2) via a roller bearing or the like.

3. A cutting attachment as claimed in any preceding claim, wherein the extensions (33) are provided in the form of prongs having a rounded profile (hollows and tips).

4. A cutting attachment as claimed in any preceding claim, wherein the distance between two tips or ends of adjacent extensions (33) ranges from 2 cm to 5 cm.

5. A cutting attachment as claimed in any preceding claim, wherein the number of extensions ranges from 10 to 60, preferably from 20 to 40.

6. A cutting attachment as claimed in any preceding claim, linked to the chassis via a suspension system.

7. A cutting attachment as claimed in any preceding claim, wherein the ends of the extensions (33) are slightly upwardly curved.

8. A mower having a cutting attachment as claimed in any preceding claim.

9. A mower as claimed in the preceding claim, **characterized in that** it is a robotic mower.

10. A mower as claimed in any claim 8 or 9, **characterized in that** it is suitable for mowing golf courses, more particularly practice courses.

## Patentansprüche

1. Schneidkopf für eine Mähvorrichtung, mit einem Motor, dessen Antriebsachse (6) mit einer senkrecht zu dieser besagten Achse angeordneten und an ihrer Peripherie mit wenigstens einer Klinge (1) versehenen Schneidplatte (2) verbunden ist, und mit einer unteren Platte (3), die im wesentlichen parallel zu und unterhalb der Schneidplatte angeordnet ist (2), wobei die Peripherie der unteren Platte (3) mit im wesentlichen koplanaren Ansätzen (33) versehen ist und sich in radialer Richtung über den Bereich hinaus erstreckt, der durch die Klingen (1) überstrichen wird, **dadurch gekennzeichnet, daß** die runde Platte (3) mit Ausnahme der Ansätze (33) im wesentlichen die gleiche oder eine geringere Abmessung aufweist als die Abmessungen der Schneidplatte (2) mit Ausnahme der Klingen (1).

2. Schneidkopf gemäß einem der vorangehenden Ansprüche, **dadurch gekennzeichnet, daß** die untere Platte (3) über Rollen oder äquivalente Mittel frei beweglich an der Achse (6) der Schneidplatte (2) angeordnet ist.

3. Schneidkopf gemäß einem der vorangehenden Ansprüche, **dadurch gekennzeichnet, daß** die Ansätze (33) die Form von Zähnen mit abgerundetem Profil (Vertiefungen und Erhebungen) aufweisen.

4. Schneidkopf gemäß einem der vorangehenden Ansprüche, **dadurch gekennzeichnet, daß** der Abstand zwischen zwei benachbarten Erhebungen oder Ansatzenden (33) zwischen 2 cm und 5 cm variiert.

5. Schneidkopf gemäß einem der vorangehenden Ansprüche, **dadurch gekennzeichnet, daß** die Anzahl der Ansätze zwischen 10 und 60, vorzugsweise zwischen 20 und 40, variiert.

6. Schneidkopf gemäß einem der vorangehenden Ansprüche, **dadurch gekennzeichnet, daß** er über ein Aufhängungssystem mit dem Rahmen verbunden ist.

7. Schneidkopf gemäß einem der vorangehenden Ansprüche, **dadurch gekennzeichnet, daß** die Enden der Ansätze (33) leicht nach oben gebogen sind.

8. Rasenmäher, **dadurch gekennzeichnet, daß** der mit einem Schneidkopf gemäß einem der vorangehenden Ansprüche ausgestattet ist.

9. Rasenmäher gemäß dem vorangehenden Anspruch, **dadurch gekennzeichnet, daß** es sich um einen automatischen Rasenmäher handelt.

10. Rasenmäher gemäß einem der vorangehenden Ansprüche 8 oder 9, **dadurch gekennzeichnet, daß** die Schur einem Golfgelände angepaßt ist, insbesondere dem "Übungsbereich".
